# EUROPEAN PATENT SPECIFICATION

(11) **EP 3 731 081 B1**
(45) Date of publication and mention of the grant of the patent: **07.06.2023**
(21) Application number: 19382318.4
(22) Date of filing: 26.04.2019
(51) Int. Cl.: G06F 7/58

(54) **COMPACT DIGITIZATION SYSTEM FOR GENERATING RANDOM NUMBERS**
KOMPAKTES DIGITALISIERUNGSSYSTEM ZUR ERZEUGUNG VON ZUFALLSZAHLEN
SYSTÈME COMPACT DE NUMÉRISATION POUR GÉNÉRER DES NOMBRES ALÉATOIRES

(43) Date of publication of application: 28.10.2020
(73) Proprietor: Quside Technologies S.L., 08860 Barcelona (ES)
(72) Inventor: ABELLAN, Carlos, 08860 Barcelona (ES); TULLI, Domenico, 08860 Barcelona (ES); AMAYA, Waldimar, 08860 Barcelona (ES); MARTINEZ, José, 08860 Barcelona (ES)
(74) Representative: Grünecker Patent- und Rechtsanwälte PartG mbB

(56) References cited:
- US-A1- 2013 036 145
- US-B1- 7 284 024
- Juan Rafael Álvarez Velásquez ET AL: "Coherence-based quantum random number generator", , 27 August 2018 (2018-08-27), XP055631447, Retrieved from the Internet: URL:https://upcommons.upc.edu/bitstream/ha ndle/2117/124622/TFM_JuanRafaelAlvarez.pdf [retrieved on 2019-10-14]
- GUANG-ZHAO TANG ET AL: "Quantum Random Number Generation Based on Quantum Phase Noise", CHINESE PHYSICS LETTERS, vol. 30, no. 11, 1 November 2013 (2013-11-01), page 114207, XP055631436, GB ISSN: 0256-307X, DOI: 10.1088/0256-307X/30/11/114207
- XU FEIHU ET AL: "A high-speed quantum random number generator prototype", CLEO: 2013, THE OPTICAL SOCIETY, 9 June 2013 (2013-06-09), pages 1-2, XP032602682, DOI: 10.1364/CLEO_AT.2013.JW2A.58 [retrieved on 2014-06-12]
- MIGUEL HERRERO-COLLANTES ET AL: "Quantum Random Number Generators", ARXIV.ORG, CORNELL UNIVERSITY LIBRARY, 201 OLIN LIBRARY CORNELL UNIVERSITY ITHACA, NY 14853, 12 April 2016 (2016-04-12), XP080694891,

## Description

The present invention relates to a system for generating random numbers according to the introductory part of claim 1 and a method for generating random numbers according to the introductory part of claim 10.

### Prior art

From the prior art, a plurality of systems is known for generating random numbers. Those systems can, in principle, be divided into two distinct technical approaches.

The first technical approach uses complex algorithms and initial conditions, also referred to as seeds (like the date), in order to calculate pseudo random numbers, that, preferably, have a most even distribution over a specific interval (usually 0 to 1).

While those systems only require a computer for generating the random numbers, they suffer from problems with a specific algorithm being used that results in a sequence of random numbers that can be fully predicted, even when showing good statistical results. In addition to being predictable, pseudo-random number generators also show finite lengths, i.e. after a given number of produced bits, they start repeating the same sequence again.

On the other hand, other approaches use physical systems that have random properties from which random numbers are extracted. Some approaches, for example, use a reference signal, for example generated by a direct current source emitting a specific voltage, and a laser system that causes a specific voltage signal at a photodiode. The electrical signals of the reference source and the photodiode can, then, be compared and, if the signal generated by the photodiode is larger than that of the reference signal, the value can be set to 1 whereas, in any other case, the value is 0.

A specific subset of physical random number generators are based on measuring quantum systems. In this way, randomness is generated directly by sampling the dynamics of a quantum process, which, under proper conditions, enables the generation of totally unpredictable random numbers. As an example, the phase diffusion process in pulsed semiconductor lasers can produce random numbers from the quantum mechanical process of spontaneous emission.

As one example, US 7 284 024 B1 shows a quantum noise random number generator system that employs quantum noise from an optical homodyne detection apparatus. The system utilizes the quantum noise generated by splitting a laser light signal using a beamsplitter having four ports, one of which receives the laser light signal, one of which is connected to vacuum, and two of which are optically coupled to photodetectors. Processing electronics process the difference signal derived from subtracting the two photodetector signals to create a random number sequence. Because the difference signal associated with the two photodetectors is truly random, the system is a true random number generator.

Moreover, US 2013/3036145 A1 describes a process and system for producing random numbers by means of a quantum random number generator where the method comprises the steps of operating a laser in single mode and high modulation bandwidth by means of an electrical pulse driver, transforming the phase randomized optical pulses produced before in optical pulses with random amplitude and detecting the resulting random amplitude signals by means of a fast photodiode. The numbers thus produced are truly random.

Moreover, "Coherence-based quantum random number generate" by Velasquez et al discloses means for considering the random change oft he phase of a laser as the physical source of randomness, thereby allowing the implementation of a new type of quantum random number generators.

Further still, "Quantum random number generators" by Herrero-Collantes et al suggests different technologies in quantum random number generation from the early devices based on radioactive decay tot he multiple ways to use the quantum states of light to gather entropy from a quantum origin. Further, randomness extraction and amplification and the notable possibility of generating trusted random numbers even with untrusted hardware using device independent generation protocols are discussed.

While, in theory, the numbers created are in fact perfect random numbers (i.e. it is completely unpredictable whether the obtained value at a specific measurement is 1 or 0), the real physical systems suffer from issues like small fluctuations in the reference signals or temperature, among many other practical imperfections. This can lead to a shift in the probability distribution, thereby not resulting in perfect random numbers. Eliminating these issues usually requires significant effort and, therefore, also results in larger systems and lower frequency of random number generation as well as increased costs.

### Objective

Starting from the known prior art, the objective of the present invention is to provide a system and method for generating random numbers that yields improved results with respect to the even distribution of the random numbers over the chosen interval, while, at the same time, reducing the complexity of random number generators.

### Solution

This problem is solved by the system for generating random numbers according to independent claim 1 and the method for generating random numbers according to claim 10. Preferred further embodiments are referred to in the independent claims.

According to the invention, a system for generating random numbers is provided, the system comprising an optical component that is adapted to generate two optical signals, and two photodetectors connected to the optical component, wherein the first photodetector is adapted to receive the first optical signal and to generate a first electrical signal based on the first optical signal and the second photodetector is adapted to receive the second optical signal and to generate a second electrical signal based on the second optical signal, wherein the optical component is adapted to generate first and second optical signals that randomly result in first and second electrical signals where the first and second electrical signals are either equal or one is larger than the other, the system characterized in that the photodetectors are adapted to transmit the first and second electrical signals to a comparator, wherein the comparator is adapted to provide an output based on a comparison of the first and second electrical signals, thereby providing the random number.

It is noted that the comparator is, according to the invention, intended to provide the output by using the first and second electrical signals as they are generated by the photodetectors. Thus, no intermediate hardware or processing component that actively alters the first and second electrical signals or generates an intermediate signal to be provided to the comparator is provided between the photodetectors and the comparator in the preferred embodiments. The comparator may be any hardware component adapted to perform this operation. Specifically, it can be any analog-to-digital converter and specifically a limiting amplifier can be used. Also, a multibit analog to digital converter can be used. This convertor does not only use two incident signals (for example one signal of the first photodetector and one signal of the second photodetector) but uses a series of such signals to generate a multibit output. Thus, the term comparator is to be seen as any hardware component adapted to provide an output signal based on the comparison of the first and second electrical signals, where this output is preferably a definite output. In this context, a definite output means that the output is the same for identical results of the comparison.

It is a finding of the present invention that this arrangement according to the invention shows increased uniformity of the probability distribution with respect to obtaining either a value 1 or a value 0 by the comparator, while also achieving a high frequency of random number generation. This is specifically the case because the only component used for transforming the optical interference signal to the random numbers is (the photodetectors and) the comparator, thereby eliminating the need for subtractors and other hardware components that usually only have a comparably small processing frequency of signals and/or introduce noise and imperfections, thus reducing the unpredictability of the generated random bits.

According to a further embodiment, the optical component of the system comprises two laser sources, an interferometer arranged and adapted with respect to the laser sources to achieve interference between laser light emitted from the first laser source (also called the first laser beam) and the laser light emitted from the second laser source (also called the second laser beam), wherein the relative phase of the laser light emitted from the first laser source and the laser light emitted from the second laser source is random, wherein the interferometer, which can be built for instance using a multimode interferometer (MMI), is adapted to generate at least two interference beams, wherein the interferometer may be further adapted to apply a phase shift to at least one of the interference beams and the interferometer is adapted to transmit the first interference beam to the first photodetector for generating the first electrical signal and the second interference beam to the second photodetector for generating the second electrical signal. Note that due to energy conservation, the two output interference beams show a certain phase relationship. For instance in the case of two output interference signals, these two outputs will show a phase relationship of 90°, namely, when the interference is constructive in one interference beam it must be destructive in the other.

It is noted that this embodiment covers cases where exactly one interference beam is provided to exactly one photodetector, i.e. the first interference beam is transmitted to the first photodetector only and the second interference beam is transmitted to the second photodetector only. This embodiment also covers cases where both interference beams are provided to both photodetectors.

Applying a phase shift to at least one of the interference beams also covers the case where a phase shift is applied to each of the interference beams. In this case, the phase shift applied to the first interference beam is preferably different from that applied to the second interference beams.

When application of a phase shift to an interference beam is mentioned, this does not only cover the case where the phase of the interference beam (comprising the laser light of the first laser source and the laser light of the second laser source in interference) is changed. It is also intended to cover cases where only the phase of one of the laser lights constituting the interference beam is changed. For example, within the interferometer and before generating at least one of the interference beams, a phase shift can be applied to at least one of the laser light of the first laser source and the laser light of the second laser source. The application of an (intentional additional) phase shift to the interference beam can be achieved by positioning for example a known λ-plate in the path of the interference beam.

The mentioned phase shift is not necessarily further specified. In fact, the phase shift can be a (fixed and predetermined) arbitrary value. While a specific phase shift by π can be preferred, any other phase shift can be thought of. For example, the phase shift of one interference beam may be ¾ π.In one embodiment, the interferometer is a Michelson-Morley-interferometer or a Mach-Zehnder-interferometer with two optical output ports, wherein the first optical output port is connected to the first photodetector and the second optical output port is connected to the second photodetector.

It may be intended that the Michelson-Morley-interferometer comprises two input ports, one for the first laser source and one for the second laser source where the beams are provided to a semitransparent mirror, preferably with an incident angle of 90°. Both laser beams, i.e. the first laser beam (the laser light emitted from the first laser source) and the second laser beam (the laser light emitted from the second laser source) are thus split in one beam that is transmitted through the semitransparent mirror and one beam that is only reflected. The reflected beam will experience a shift in phase of π (i.e. 180°) whereas the transmitted beam does not.

Using such an interferometer allows for a compact design while achieving high physical stability of the generation of the interference beams.

In another embodiment, the interferometer is a Mach-Zehnder-interferometer and one laser source is used. The signal generated by the laser is sent to the input of the Mach-Zehnder interferometer, which is comprised of a first beam splitter, with a preferably 50/50 splitting ratio, which produces two optical beams that are connected to a second beam splitter, with preferably 50/50 splitting ratio, via two different optical paths, one of which is longer than the other, introducing a delay between the two optical beams. The second beam splitter performs therefore the interference between the two optical beams, one being a self-delayed version of the other one.

In a further embodiment, the laser sources are laser diodes. Laser diodes can be miniaturized significantly and only require little amounts of energy. Furthermore, they show advantageous pulsing properties when driving one of the laser sources in pulse mode.

In a further embodiment, the first laser source and the second laser source are connected to a multimode interferometer, preferably configured to generate two output interference beams.

In a further embodiment, the interferometer is configured in a 90°-hybrid configuration, thus providing 4 optical output interference beams with phase relationships of 0°, 90°, 180° and 270°. The output of each interference beam is sent to four independent photodetectors. The electrical signals corresponding to beams with phase relationship of 0° and 180° are sent to the two input ports of a comparator and the optical beams corresponding to 90° and 270° to another comparator. In this embodiment the two quadratures of the electromagnetic field are used, thus doubling the random number generation capacity.

In a further embodiment, the first laser source is adapted to be driven in constant wave mode and the second laser source is adapted to be driven in pulse mode; or the first laser source and the second laser source are adapted to be driven in pulse mode; or the first laser source and the second laser source are adapted to be driven in continuous wave mode; or only one laser source is driven in continuous wave mode whereas the other input port is left open.

According to the invention, the constant wave mode means that the first laser source constantly and continuously emits a laser beam, at least over a period of time that is 10⁵ times larger than the pulse repetition rate f⁻¹ (inverse of the pulse repetition rate) of the laser source driven in pulse mode. The pulse mode, according to the invention, means that the second laser source periodically emits (short) laser pulses of a pulse repetition rate f, where f is the pulse repetition rate indicating the number of consecutive pulses per second. This embodiment allows for creating random numbers at a high frequency while providing a physically stable system.

In a more specific realization of this embodiment, the second laser source (or any of the laser sources intended to be driven in pulse mode) is adapted to be driven in a power area ranging from a value below the lasering threshold to the lasering threshold. This means that the laser source is driven, when not emitting a pulse, with a power that is below the lasering threshold, thus reducing the stress to the laser source. For example, the power may be 70% or may be less than 60%, for example 20% or even 0%. It is also possible to drive the second laser source (or any of the laser sources intended to be driven in pulse mode) with inverted power, i.e. inverted electrical power source.

Additionally, the pulse repetition rate with which the second laser source (or any of the laser sources intended to be driven in pulse mode) reaches the lasering threshold can be greater than 100MHz, or greater than 500MHz or greater than 1 GHz. It can also be smaller than 100MHz. With these embodiments, a significant amount of random numbers can be generated.

It can also be provided that the laser sources are connected to the interferometer by a separate wave guides and/or the interferometer can be connected to each of the photodetectors by a separate wave guide. Such wave guides can reduce environmental influences on the signals generated, thereby stabilizing the generation of random numbers also when environmental conditions change.

In a further embodiment, a tempering system for tempering the laser sources can be provided, the tempering system being adapted to regulate the temperature of the first and second laser sources independently. Changes in temperature, which could result in the lasering properties of the first and/or second laser sources changing, can thus be controlled and reduced.

The method for generating random numbers according to the invention uses a system comprising an optical component, two photodetectors connected to the optical component and a comparator connected to the photodetectors, the method comprising generating, by the optical component, two optical signals and transmitting the first optical signal to the first photodetector and the second optical signal to the second photodetector, generating, by the first photodetector, a first electrical signal based on the first optical signal and generating, by the second photodetector, a second electrical signal based on the second optical signal, wherein the first and second optical signals randomly result in first and second electrical signals where the first and second electrical signals are either equal or one is larger than the other, the method characterized by transmitting the first electrical signal and the second electrical signal to the comparator and comparing, by the comparator, the first and second electrical signals and providing, by the comparator, an output based on the comparison of the first and second electrical signals, thereby providing the random number.

Thereby, true random numbers can be generated at high frequency with a stable and simple digitization scheme.

In one further embodiment, the optical component comprises two laser sources and an interferometer and wherein generating the first and second optical signals comprises emitting, by each of the laser sources, laser light into the interferometer, wherein the relative phase of the laser light emitted by the first laser source and laser light emitted by the second laser source is random, generating, by the interferometer, two interference beams, the interferometer transmitting the first interference beam to the first photodetector to generate the first electrical signal and the second interference beam to the second photodetector to generate the second electrical signal.

This method achieves increased uniformity in probability distribution for the values 0 and 1 obtained as output from the comparator, while also resulting in a high frequency of random number generation and simplified digitization circuitry.

In one embodiment, the output of the comparator is 1 in case the first signal is larger than the second signal and 0 in any other case. The "size" of the signals may be a voltage or current of the first and second electrical signals. The term "size" may refer to physical values like the amplitude of the signal, the voltage or current associated with the signal or the like.

The phase relation of the first and second laser beam might be governed by the laws of quantum physics. The phase of a laser beam follows the spontaneous emission that finally results in the laser beginning lasering. This spontaneous emission and specifically its phase, however, cannot be predicted and the probability for obtaining, for a laser starting lasering, a specific phase out of all possible phases is identical for all potential phases. This results in the relative phase of the first and second laser beams being completely random. Because of this, some of the signals generated will show a first electrical signal being larger than the second electrical signal and some will show the opposite, thus resulting in a uniform probability distribution. It is noted that the perfect randomness of the phase is achieved only if the laser has experienced a sufficiently large phase diffusion. This can be accomplished for a pulsed laser with an off-time of the lasering that is below 100ps. In other cases, the probability distribution of the phases usually follows a Gaussian distribution.

In one embodiment, the first laser source is driven in constant wave mode and the second laser source is driven in pulse mode; or the first and second laser sources are driven in pulse mode; or the two laser sources are driven in constant wave mode; or one laser is driven in constant wave mode while the other is completely switched off.

In a more specific realization of this embodiment, the second laser source (or any of the laser sources intended to be driven in pulse mode) is periodically driven in a power area ranging from a value below the lasering threshold to the lasering threshold, wherein the second laser source periodically reaches the lasering threshold. Reaching the lasering threshold will result in the second laser source emitting a laser pulse with arbitrary phase with respect to the phase of the laser beam emitted by the first laser source, thereby allowing for generating the random number. By using this area of power, the physical stress to the second laser source can be reduced while separating the areas of pulse generation from each other by phases where no pulses are generated by the second laser source, thus reducing the noise in the signals generated. For example, the power may be 70% or may be less than 60%, for example 20% or even 0%. It is also possible to drive the second laser source (or any of the laser sources intended to be driven in pulse mode) with inverted power, i.e. inverted electrical power source. By those measures, spontaneous but unintended lasering of the second laser source (or any of the laser sources intended to be driven in pulse mode) can be avoided efficiently, thereby reducing the noise in signal generation.

It can also be provided that a pulse repetition rate with which the second laser source reaches the lasering threshold is greater than 100MHz, or greater than 500 MHz or greater than 1 GHz. It can also be smaller than 100MHz. Depending on the pulse repetition rate chosen, a significant amount of random numbers can be generated.

In a further embodiment, a tempering system regulates the temperature of the first and second laser sources independently. Thereby, changing environmental conditions having influence on the temperature of one of the laser sources can be eliminated to physically stabilize the system.

In a more specific embodiment, the tempering system regulates the temperatures such that a difference in the temperature of the first laser source and the temperature of the second laser source is smaller than 0.1K. Negative impacts on the generated laser beams due to varying temperatures of the laser source can thus be suppressed, thereby reducing the unintended noise in the generated signals.

### Brief description of the drawings

- Figure 1: shows a system for generating random numbers according to one embodiment
- Figure 2a+b: show two embodiments of interferometers
- Figure 3: shows a system for generating random numbers according to a further embodiment.

### Detailed description

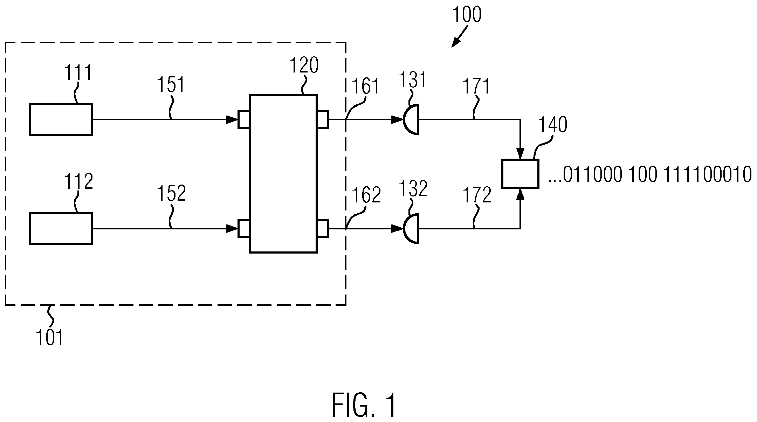

Figure 1 shows a system 100 for generating random numbers.

The system 100 can either have macroscopic scales, i.e. have dimensions larger than 1cm or several centimeters but it can also be implemented as a system on a chip having only microscopic scale, i.e. being smaller than 1cm, preferably smaller than 0.5cm.

In a preferred embodiment, the system 100 is provided on an integrated chip that can, for example, be included in a smartphone and has dimensions preferably smaller than 1cm.

Though a special implementation of the inventive system is depicted in fig. 1, the general concept according to the invention refers to a system and a method for generating random numbers, where the system comprises an optical component that is adapted to generate two optical signals, and two photodetectors connected to the optical component, wherein the first photodetector is adapted to receive the first optical signal and to generate a first electrical signal based on the first optical signal and the second photodetector is adapted to receive the second optical signal and to generate a second electrical signal based on the second optical signal, wherein the optical component is adapted to generate first and second optical signals that randomly result in first and second electrical signals where the first and second electrical signals are either equal or one is larger than the other. According to the invention, the photodetectors are adapted to transmit the first and second electrical signals to a comparator wherein the comparator is adapted to provide an output based on a comparison of the first and second electrical signals, thereby providing the random number.

In fig. 1, the optical component (101) may be considered to comprise all the elements 111, 112 and 120 and the optical signal generated by this optical component may be the signals 161 and 162 as explained below.

While the examples provided in the following figures concentrate on realizations using laser sources and interferometers for generating the optical signals that are finally detected by the photodetectors, any other optical system that can generate two optical signals that have a random property with respect to each other that can be detected by photodetectors and translated into electrical signals for comparison by the comparator is encompassed by the present invention.

The exemplary system 100 comprises two laser sources, a first laser source 111 and a second laser source 112. The laser sources are preferably adapted to transmit a first laser beam (also called first laser light emitted by the first laser source) 151 and a second laser beam (also called second laser light emitted by the second laser source) 152 (for the first and second laser sources, respectively) with similar, preferably identical frequency. However, due to the laws of quantum physics, the phase ϕ₁ of the first laser beam and the phase ϕ₂ of the second laser beam are random. Though reference is made to laser "beams", at least one of the first and second laser sources can be adapted to generate and emit laser pulses (also covered by the term "laser light").

The first laser beam and the second laser beam are then both introduced into an interferometer (like a Michelson-Morley-interferometer or a Mach-Zehnder-interferometer) 120. The interferometer is adapted to generate, from the first and second laser beams, a first interference beam 161. As another preferred embodiment, the interferometer may be a multi-mode interferometer.

Additionally, the interferometer is adapted to generate a second interference beam. This interference beam 162 from the first laser beam and the second laser beam.

According to the preferred embodiments, the interferometer is adapted to interfere the two input beams with a 50/50 power balance to two output ports, thus producing a complementary signal (i.e. the signal in the two output ports has a shift of for example 180° or 90°, thus conserving the energy). When the signal from the two laser beams interfere at the output ports, it creates an interference pattern depending on the phase of each laser beam.

The system further comprises two photodetectors 131 and 132. Those are arranged such that the first interference beam 161 generated by the interferometer can be transmitted to the first photodetector 131 and the second interference beam 162 generated by the interferometer can be transmitted to the second photodetector 132. The photodetectors may be arbitrarily designed. For example, they can be implemented as photo multipliers or commonly known photo diodes. Also, CCD sensors may be used. Preferably, photodetectors are used that have a high detection frequency, i.e. allow for detecting events at a frequency of several 100 MHz, preferably up to 1 or 2 GHz.

The photodetectors create, from the first interference beam and the second interference beam, a first electrical signal 171 (by the first photodetector 131) and a second electrical signal 172 (by the second photodetector 132). Both signals are provided to a comparator 140. This can be facilitated for example by transmitting the signals from the photodetectors 131 and 132 via electrical conductors like wires to the comparator or waveguides in the case of integrated circuits.

The electrical signals may show different voltages or currents depending on the first and second interference beams.

The comparator works in its ordinary sense, i.e. provides an output that is either 1 if the first electrical signal (i.e. for example the voltage of the first electrical signal) is larger than the second electrical signal (i.e. for example its voltage) and an output that is 0 in any other case. The comparator can also be embodied, for example, as a limiting amplifier or any other hardware component or software component adapted to provide the above mentioned output based on the optical signals and the respective comparison.

Due to the random relative phase of the first laser beam and the second laser beam to each other, it cannot be predicted how the output of the comparator will be, i.e. whether it is 1 or 0. According to the invention, this can be used to create a significant amount of random numbers. For this, in one embodiment, one of the laser sources, for example the first laser source 111, is driven in constant wave mode as a "reference signal". The constant wave mode here means that the first laser source continuously emits the first laser beam 151 at least for a period of time. If the environmental conditions of the first laser source can be regulated to be perfectly constant, this reference signal is constant over a long period of time, thereby reducing any unintended noise in the reference signal and any unintended influence on the interference beams generated.

The second laser source 112 can, according to this embodiment, be driven in pulse mode, i.e. can be provided to transmit a laser pulse periodically. In order to achieve this, the second laser source can be driven at a power close to the lasering threshold. The lasering threshold is the power that has to be introduced into the second laser source for achieving lasering. When using, as the second laser source (but also perhaps as the first laser source), a laser diode, pulse repetition rates (measured in number of pulses per second) can be obtained that range from several MHz to even GHz. This pulse repetition rate is not related to the frequency of the laser pulse generated but to the number of pulses generated per second. Let this pulse repetition rate be f. It is then preferred that the time t for which the first laser source continuously emits the first laser beam is at least t=10⁵f⁻¹, more preferably t=10¹⁰f⁻¹ to have a reference signal that is constant over a significant number of pulses generated by the second laser source.

It is noted that instead of driving one of the laser sources in constant wave mode also embodiments are intended where both laser sources are driven in pulse mode. In such a case, no continuously emitted laser beam of one of the laser sources is used as "reference" signal, but the obtained pulses are merely compared to each other, thereby achieving a corresponding result as the one explained above for the case where one of the laser sources is driven in constant wave mode and the other is driven in pulse mode.

As the phase of each of these generated pulses is completely random with respect to the continuous laser beam generated by the first laser source, it cannot be predicted how the interferences beams will look like. However, it is clear that they will create an interference signal that is between (and comprises) complete distinction and full amplification. As the interference beams (or at least one of them) experience a phase shift relative to each other, the signals obtained by the photodetectors will differ from each other unless the first and second laser beams result in complete distinction or full amplification.

In any case, the first and second interference beams will either be equal to each other or the one will result in a signal (for example voltage) of the photodetector being larger than the other. This allows the comparator to generate a clear output signal that is either 0 or 1 although this output signal cannot be predicted, thus being completely random.

The output provided by the comparator will, at first, be a series of digits, i.e. of 0s and 1s depending on the actual phase relation of the first laser beam and second laser beam. This series of digits can then be used as the random number by, for example, using the sequence of 0s and 1s as the random numbers themselves (for example, after every millionth pulse, the series is aborted and used as a random number and the consecutive digits obtained are used as the the following random number). Furthermore, it can also be provided that the number of digits is used to calculate a real number, for example an integer number, that will also be completely arbitrary and can, thus, be used as the random number.

There is no limitation with respect to how the digits are actually provided or used as random number. Among their potential applications, they can be used to, for example, encrypt sensitive data and specifically sensitive data that is transferred from a first computing entity, like a smartphone, to a second computing entity, like a login server for logging into a service like an online banking account. Additionally, the random numbers generated can be used for encrypting communication like emails or instant messages transmitted between entities, like two smartphones or a plurality of smartphones. In the last case, where the random numbers are used for encrypting the communication between smartphones or other small computing devices, it is preferred that the system for generating random numbers is provided on the respective computing systems (smartphones or the like) themselves. Therefore, it is preferred that in this case the system is miniaturized as far as possible.

Though, in principle, the first and second laser sources can be laser sources that emit laser beams at an arbitrary frequency ranging from the infrared over optical to even ultraviolet signals, it is preferred that the laser sources are selected from laser sources that have a wavelength that it is much smaller compared to the dimensions of the system for generating random numbers in order to avoid unintended noise due to refraction or other optical disturbances. Specifically, laser sources may be preferred that emit laser beams with a wavelength that is 10⁻² or even more preferred 10⁻⁵ times the smallest relevant length of the optical components of the system for generating random numbers. The optical components are all components that have influence on the laser beams transmitted by the first laser source 111 and the second laser source 112. This, for example, refers to wave guides used for transmitting the first and second laser beams to the interferometer, any physical components within the interferometer, like the incident arms and the transmitting arms, and also wave guides that transmit the first and second interference signals to the first and second photodetectors.

In view of this, laser sources may be preferred that either transmit optical light in the range of some 100 nm or ultraviolet light. A preferred wavelength may be between 1300 and 1600nm. Most preferred, the wavelength is 1330nm or 1550nm.

When providing the system 100 on an integrated chip, all above mentioned components are provided on the integrated chip. Other components, for example a frequency generator that causes the pulsed lasering of the second laser source, may also be provided on the chip or such additional components may be provided as separate hardware.

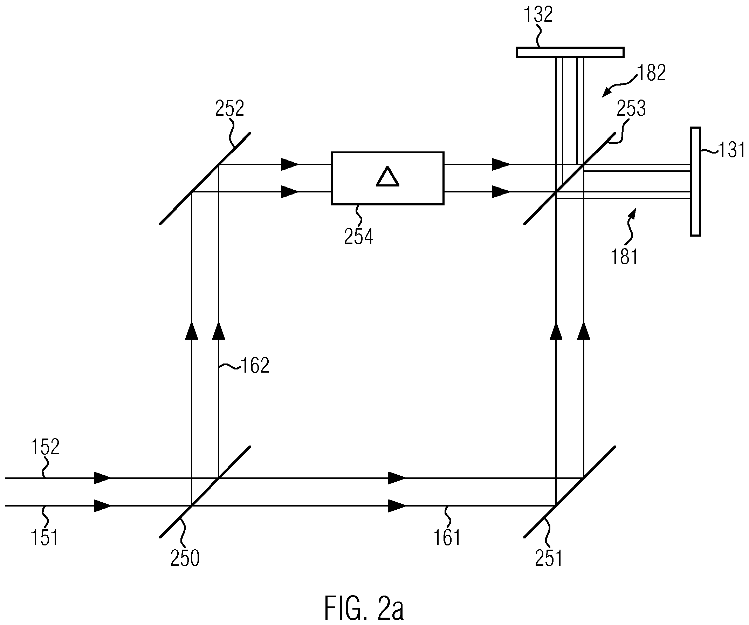

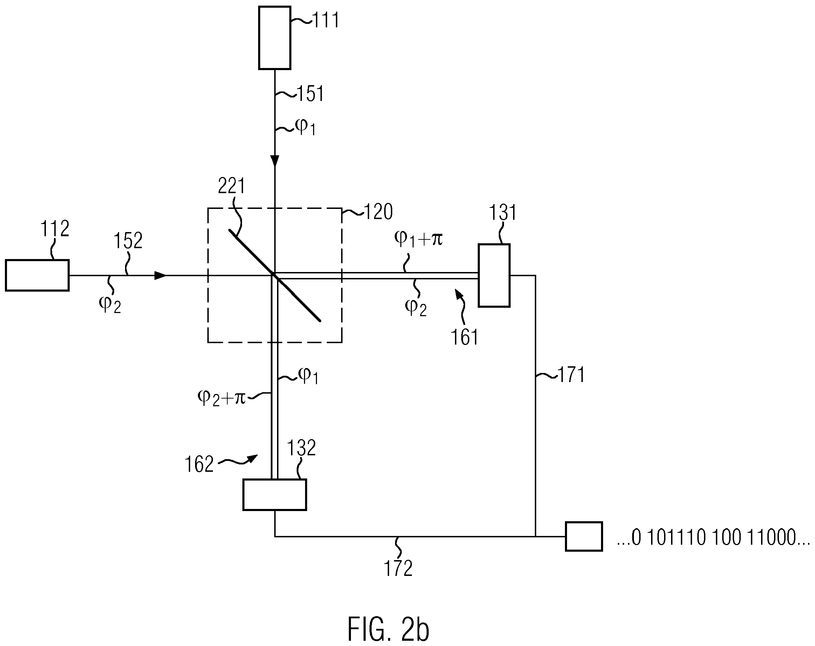

Referring now to figures 2a and 2b, more specific realizations of the general embodiment according to figure 1 are described. In these embodiments, specific realizations of the interferometer are chosen.

In the case of fig. 2a, the interferometer is a Mach-Zehnder-interferometer 120. This interferometer comprises at least one input port through which the laser beams 151 and 152 generated by the first and second laser sources are introduced. The interferometer 120 further comprises two mirrors 251 and 252 as well as two semitransparent mirrors, 250 and 253. Further, a phase-shift component 254 (like a λ/4 (quarter-wave) or λ/2 (half-wave) plate) is provided between the mirror 252 and the semitransparent mirror 253. Instead, it could also be provided between the semitransparent mirror 250 and the mirror 251. Also other realizations are possible. In any case, the interferometer comprises at least one phase-shift component 254 through which one of the interference beams travels and the other one does not.

The incident laser beams 151 and 152 hit the semitransparent mirror 250. Here, two (intermediate) interference beams, a first interference beam 161 and a second interference beam 162 are created from the first and second laser beams. The first interference beam 161 travels from the semitransparent mirror 250 to the mirror 251 and further to the semitransparent mirror 253. The second interference beam travels from the semitransparent mirror 250 to the mirror 252 and is reflected in the direction of the phase-shift component 254. In this phase-shift component, the phase of the interference beam 162 experiences a well-defined phase shift, for example by π, corresponding to λ/2. Arbitrary other values of phase shift can be thought of. The phase shift, however, is different from 2nπ, where n is an integer.

After that, the interference beam travels to the semitransparent mirror 253. Here, the first intermediate interference beam 161 and the second intermediate interference beam 162 generate a first interference beam 181 and a second interference beam 182. The first interference beam travels to the first photodetector 131, resulting in the generation of a first electrical signal. The second interference beam 182 travels to the second photodetector, causing a second electrical signal.

The beams (including all interference beams and the incident laser beams) can propagate through suitable waveguides like glass fiber or other waveguides suitable for the respective wavelength used.

In the embodiment described in fig. 2a, it is one of the (intermediate) interference beams that experiences a phase shift in the phase-shift component 254. In the case of fig. 2b, it is one of the incident laser beams that experiences the phase shift.

In the case of fig. 2b, the interferometer 120 is embodied as a Michelson-Morley-interferometer that comprises a semitransparent mirror 121. The first laser source 111 is arranged to transmit the first laser beam 151 with a phase ϕ₁ onto a first side of the mirror 121. The first laser beam may be input into the interferometer through a not further shown (optical) input port. The second laser source 112 is arranged to transmit the second laser beam 152 with a phase ϕ₂ to the opposite side of the semitransparent mirror, for example by introducing it into the interferometer by a likewise not further shown (optical) input port. By using a semitransparent mirror, the laser beams will be split into a portion that is reflected by the mirror 221 and a portion that is transmitted through the mirror. The laser beams that are reflected at the surface of the mirror 221 will experience a phase shift by π whereas those laser beams that are transmitted through the mirror will not experience such a phase shift.

The arrangement chosen results in the interference beams 161 and 162 where, for the first interference beam, the phase ϕ₁ of the first laser beam is shifted by π and thus has a phase ϕ₁ + π. For the second interference beam, the phase of the second laser beam 152 experiences a shift by π and thus, after being reflected by the mirror 221, has a phase ϕ₂ + π. In propagation direction of the first and second interference beams, respectively, the first photodetector 131 and the second photodetector 132 are arranged to receive the first and second interference beams. The interference beams may leave the interferometer through suitable, not further shown (optical) output ports.

The Michelson-Morley-interferometer 120 may be realized by (optical) wave guides that are connected to the first and second laser source, respectively, for coupling in the first and second laser beams through the input ports into the interferometer. The wave guides may have identical length and may input the first and second laser beams, respectively, to the mirror 221. Additionally or alternatively, wave guides may be provided for receiving the interference beams 161 and 162 and guiding the interference beams to the photodetectors 131 and 132. These may be connected to or constitute the output ports.

In case, however, the system is miniaturized to dimensions much smaller than 1cm, those wave guides may not be formed by, for example, glass fibers, but may just be wave guides through which the electromagnetic waves can travel without distinction or at least with a damping length larger than the distance between the mirror and the photodetectors (and/or the laser sources) or at least larger than 0.5 times the distance between the mirror 221 and the photodetectors (and/or the laser sources), respectively.

Thereby, it can be ensured that the interference beams incident on the photodetectors 131 and 132, respectively, still have enough signal strength for the photodetectors to result in a clearly detectable signal above the noise of the photodetectors themselves and any other noise of the system (for example thermal noise or the like).

While only two specific realizations of interferometers as optical components have been described above, it is noted that those are not limiting to the invention and other optical components that generate two optical signals for the photodetectors can be employed. However, among those described, the Mach-Zehnder-interferometer may be preferred.

Another preferred realization of the interferometer is a multi-mode-interferometer. Such a multi-mode-interferometer and its functioning is known to the skilled person. As with the Mach-Zehnder interferometer and the Michelson-Morley-interferometer examples are given above for the case where the interference beam experiences a phase shift and the case where one of the laser beams constituting the interference beams experiences a phase shift, a detailed description of the multi-mode-interferometer is not provided here.

However, preferably, if a multi-mode-interferometer is provided as part of the optical component, this comprises two input ports, one for the first laser beam and one for the second laser beam, and two output ports, where the first interference beam is transmitted to the first photodetector via a first output port and the second interference beam is transmitted to the second photodetector via a second output port. Another preferred embodiment comprises two input ports, on for the first laser beam and one for the second laser beam and four output ports in a so-called hybrid 90° configuration, i.e. where the four output ports have relative phases of 0°, 90°, 180° and 270°.

Between the input ports and the output ports, a multi-mode-interference coupler is provided through which at least two eigen-modes can travel. Those eigen-modes correspond, in one embodiment, to at least two wavelengths (or frequencies, respectively) constituting at least one of the laser beams. Specifically, in the case one of the laser beams is provided as laser pulse, this is constituted by a (infinite) number of waves with specific frequencies. At least two of these frequencies (corresponding to wavelengths) correspond to eigen-modes of the multi-mode-interference coupler. Thus, at least these frequencies can travel through the coupler, thereby generating interference beams that can be detected at the photodetectors.

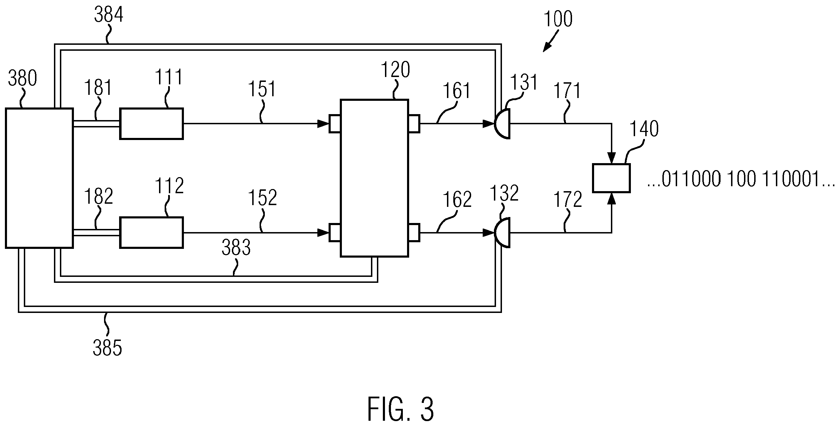

Figure 3 shows a further embodiment of the system for generating random numbers. Herein, the components labelled with the same reference numerals as used in figure 1 are identical to the components also used in the embodiment according to figure 1. Their function will thus not be repeated here where this is not necessary.

In figure 3, a tempering system 380 is provided. This tempering system can comprise sensors (such as, for example, thermal sensors) for determining the environmental conditions, specifically the temperature, at least of the first and second laser sources 111 and 112. During the laser sources 111 and 112 emitting laser beams, their temperature will rise which can result in a change in their lasering behavior, thus having influence on the accuracy of the generation of the laser beams and, hence, the interference beams. This can be measured by the sensors.

Additionally, it can be provided that sensors are provided for measuring the thermal conditions of the interferometer and/or the photodetectors. As an increase in temperature can result, for example, in changes in the length of the arms of the interferometer (see for example the arms through which the first and second laser beams travel through the mirror 221 in figure 2 and the arms through which the interference beams travel from the mirror to the photodetectors), a change in temperature can result in a change in the length of those arms and, thus, in a change of the relative phase between the interference beams. Additionally, an increase in temperature can have influence on the properties of the mirror 221 and can lead to thermal vibrations on the surface of the mirror, thus also influencing the accuracy with which the interference beams can be generated and measured. Likewise, the photodetectors will have increased noise when the temperature rises.

To prevent noise from these issues, the tempering system 380 is connected at least to the first and second laser sources 111 and 112 (schematically depicted by the pipes 381 and 382, respectively) and can preferably independently regulate the temperature of the first and second laser sources. For macroscopic systems, for example, this can be achieved by heat exchanges and a cooling circuit through which a cooling medium like air or water is circulated in order to transport away heat emitted by the first and second laser sources. For microscopic systems, means as commonly used for cooling processors or (semi-)optical components in computers can be used. It may also be preferred for cases where the system is provided on a chip to integrate the tempering system directly on the chip. This can, for example, be achieved by placing a resistor on the chip through which current can flow. Depending on the current introduced into the resistor, the resistor will dissipate heat. This heat can be used to increase the temperature of the chip to a desired value.

By controlling the temperature of the first and second laser sources independently, the temperature of the first and second laser source can be maintained at a given (preset) temperature. In the case where the first laser source is driven in constant wave mode and the second laser source is driven in pulse mode, the thermal stress of the first laser source can be different from the thermal stress of the second laser source, thereby also resulting in the first laser source requiring another cooling compared to the second laser source. Therefore, it is preferred that the control of the temperature of the first and second laser source is completely independent from each other. Even further, it is preferred that the tempering system 380 can control the temperature of the first and second laser source with an accuracy of, for example, 2K, preferably 1K, more preferably 0.1K and more preferably 0.01K.

Additionally, or alternatively, it can also be provided that the tempering system can regulate the temperature of the interferometer 120 and/or the photodetectors 131 and 132. For this, the tempering system can be connected to the interferometer 120 and the photodetectors 131 and 132 by corresponding connections 383 and 384 and 385, respectively. The cooling of these components can be achieved in the same manner as described with respect to the laser sources 111 and 112.

With respect to the interferometer, it can be intended that separate cooling is provided for the mirror 221 described with respect to figure 2, where such a mirror is provided in the interferometer.

Additionally, any optical component of the interferometer can be separately cooled in order to keep its temperature at a specific value.

The cooling of the photodetectors 131 and 132 can also be provided in independent manner such that their temperature can be kept at a constant value.

As for the first and second laser sources 111 and 112, it can be provided that the temperature of the interferometer (and its respective components) as well as the photodetectors can be controlled with an accuracy of 0.1 K or preferably 0.01K.

Though not explicitly mentioned here, it can also be provided that any other components of the system 100 depicted in figure 1 are connected to the tempering system 380 and cooled where necessary. For example, in case wave guides are used for guiding the propagation of the first and second laser beams and the interference beams, a cooling of the same can be provided. Additionally, the photodetectors 131 and 132 will likely be connected to the comparator 140 by corresponding electrical conductors like cables or any other suitable means. These can also be cooled to reduce the thermal noise in the electrical signals transmitted from the first and second photodetectors to the comparator.

In order to keep the overall noise level at a minimum, it is preferred that the travelling paths of the first and second laser beams generated by the first and second laser sources as well as the travelling paths of the interference beams 161 and 162 are equal to each other and/or are preferably as short as possible. The same holds for the length of the electrical connection between the photodetectors 131 and 132 with the comparator 140. Thereby, additional noise that could have influence on the comparison of the first electrical signal and second electrical signal generated by the first and second photodetectors in the comparator can be reduced to a minimum.

Once the comparator has calculated the comparison between the first and second electrical signals, these are transformed into digits, i.e. 0 and 1. Such clear signals suffer less from noise and, thus, the length of the travelling path of the signals generated by the comparator can be almost arbitrary without resulting in a significant deterioration or reduction of signal strength in the output of the comparator. Therefore, additional cooling for any connection of the comparator to another computing entity or a control or reduction in the length of the transport path is not mandatory but can still be provided where appropriate.

In addition or alternatively, other means for reducing noise in the generated optical signals can be thought of. For example, the laser sources will usually not yield perfectly identical wavelengths for the generated laser beams. In such cases, the coherence length of the generated laser beams can be too small (corresponding to the frequency difference between the two laser beams being to large) to generate reliable random numbers with even probability distribution. In order to stabilize the wavelengths of the laser beams, additional carriers can be injected into the active medium of the laser sources. This will result in a change of the refractive index of the cavity and will thereby result in a tuning of the wavelength. This can be used by a control system to synchronize (also known as "tuning") the wavelengths of the laser beams generated by the two laser sources exemplified above.

For example, one or more sensors can be provided for measuring the wavelengths of each of the generated laser beams preferably periodically. Alternatively, the wavelengths can be measured every 10⁻⁵s or the like. The measured wavelength of each laser beam can then be compared to a standard wavelength or to the wavelength of the other laser beam. Based on the result of this comparison, the amount of carriers injected in one or both laser sources can be changed so as to change the refractive index of the cavity and thus tune the wavelength. Thereby, the wavelengths can be synchronized with each other and stabilized over a longer period of time.

As it is not of relevance for the generation of the random numbers to have laser sources emitting both at a very specific wavelength but it is only necessary that both laser sources emit laser beams with (almost) identical wavelength to have a long coherence length (corresponding to a low beating frequency), it can be preferred that the wavelengths of the laser beams of the laser sources are only synchronized with each other but not tuned to a specific standard wavelength. Thus, shift of the wavelengths of both laser sources over time can be accepted as long as both wavelengths are synchronized with each other.

Preferably, the wavelengths of the laser beams emitted by the laser sources are synchronized such that the coherence length achieved is at least 10 times, preferably 100 times, more preferred 10⁵ times the maximum extension of the of system according to the invention. Specifically, the coherence length may be at least 10 times, preferably 100 times, more preferred 10⁵ times the optical distance (also called optical path length) between the laser sources and the photodetectors. Thereby, the noise due to the not perfectly synchronized wavelengths of the laser beams emitted by the laser sources is kept low and the generation of random numbers suffers from less failures.

Another, related aim can be to synchronize the laser sources in a manner that the frequency difference between the first and second laser beams is as small as possible. Preferably, this difference is smaller than the detection bandwidth of the photodetectors, for example at least 10 times smaller, preferably 100 times smaller, more preferred even 10⁵ times smaller than the detection bandwidth of the photodetectors.

## Claims

1. System (100) for generating random numbers, the system comprising an optical component that is adapted to generate two optical signals, and two photodetectors (131, 132) connected to the optical component, wherein the first photodetector is adapted to receive the first optical signal and to generate a first electrical signal based on the first optical signal and the second photodetector is adapted to receive the second optical signal and to generate a second electrical signal (172) based on the second optical signal, wherein the optical component is adapted to generate first and second optical signals that randomly result in first and second electrical signals where the first and second electrical signals are either equal or one is larger than the other, the system **characterized in that** the photodetectors (131, 132) are adapted to transmit the first and second electrical signals (171, 172) to a comparator (140), wherein the comparator is adapted to provide an output based on a comparison of the first and second electrical signals, thereby providing the random number, wherein the only components used for transforming the optical interference signal to the random numbers are the photodetectors and the comparator, thereby eliminating the need for subtractors.

2. System according to claim 1, wherein the optical component of the system comprises two laser sources (111,112), an interferometer (120) arranged and adapted with respect to the laser sources to achieve interference between laser light (151, 152) emitted from the first laser source and the second laser source, wherein the relative phase of the laser light (151) emitted from the first laser source and the laser light emitted from the second laser source (112) is random, wherein the interferometer (120) is adapted to generate two interference beams (161, 162), wherein the interferometer is adapted to transmit the first interference beam to the first photodetector for generating the first electrical signal and the second interference beam to the second photodetector for generating the second electrical signal.

3. System (100) according to claim 2, wherein the interferometer (120) is a Michelson-Morley-interferometer or a Mach-Zehnder-interferometer or a multimode interferometer with two optical output ports, wherein the first optical output port is connected to the first photodetector (131) and the second optical output port is connected to the second photodetector (132).

4. System (100) according to claim 2 or 3, wherein the first laser source (111) and the second laser source are laser diodes.

5. System (100) according to any of claims 2 to 4, wherein the first laser source (111) is adapted to be driven in constant wave mode and the second laser source (112) is adapted to be driven in pulse mode; or wherein the first laser source and the second laser source are adapted to be driven in pulse mode; or wherein the first laser source and the second laser source are driven in constant wave mode; or wherein the first laser source is driven in constant wave mode and the second laser source is switched off or inexistent.

6. System (100) according to claim 5, wherein the second laser source (112) is adapted to be driven in a power area ranging from a value below the lasering threshold to a value above the lasering threshold.

7. The system (100) according to claim 5 or 6, wherein a pulse repetition rate with which the second laser source (112) reaches a value above the lasering threshold is greater than 100MHz, or greater than 500MHz or greater than 1GHz.

8. System (100) according to any of claims 2 to 7, wherein the laser sources are connected to the interferometer (120) by separate waveguides and/or wherein the interferometer is connected to each of the photodetectors (131, 132) by a separate waveguide.

9. System (100) according to any of claims 2 to 8, further comprising a tempering system (380) for tempering the laser sources, the tempering system adapted to regulate the temperature of the first and second laser sources independently.

10. Method for generating random numbers using a system comprising an optical component, two photodetectors (131, 132) connected to the optical component and a comparator connected to the photodetectors, the method comprising generating, by the optical component, two optical signals and transmitting the first optical signal to the first photodetector (131) and the second optical signal to the second photodetector (132), generating, by the first photodetector, a first electrical signal (171) based on the first optical signal and generating, by the second photodetector, a second electrical signal (172) based on the second optical signal, wherein the first and second optical signals randomly result in first and second electrical signals where the first and second electrical signals are either equal or one is larger than the other, the method **characterized by** transmitting the first electrical signal and the second electrical signal to the comparator (140) and comparing, by the comparator, the first and second electrical signals and providing, by the comparator, an output based on the comparison of the first and second electrical signals, thereby providing the random number, wherein the only components used for transforming the optical interference signal to the random numbers are the photodetectors and the comparator, thereby eliminating the need for subtractors.

11. The method according to claim 10, wherein the optical component comprises two laser sources (111, 112) and an interferometer (120) and wherein generating the first and second optical signals comprises emitting, by each of the laser sources, laser light into the interferometer, wherein the relative phase of the laser light emitted by the first laser source (111) and laser light emitted by the second laser source (112) is random, generating, by the interferometer, two interference beams, the interferometer transmitting the first interference beam (151) to the first photodetector to generate the first electrical signal and the second interference beam (152) to the second photodetector to generate the second electrical signal.

12. Method according to claim 10 or 11, wherein the output of the comparator (140) is 1 in case the first electrical signal is larger than the second electrical signal and 0 in any other case.

13. Method according to claim 11 or 12, wherein the first laser source (111) is driven in constant wave mode and the second laser source (112) is driven in pulse mode; or wherein the first laser source and the second laser source are driven in pulse mode.

14. Method according to claim 13, wherein the second laser source (112) is periodically driven in a power area ranging from a value below the lasering threshold to a value above the lasering threshold, wherein the second laser source periodically reaches the lasering threshold.

15. Method according to claim 14, wherein a pulse repetition rate with which the second laser source (112) reaches a value above the lasering threshold is greater than 100MHz, or greater than 500MHz or greater than 1GHz.

16. Method according to any of claims 11 to 15, wherein a tempering system (380) regulates the temperature of the first and second laser sources (111, 112) independently.

17. Method according to claim 16, wherein the tempering system (380) regulates the temperature such that a difference in the temperature of the first laser source (111) and the temperature of the second laser source (112) is smaller than 0.1K.

## Patentansprüche

1. System (100) zum Erzeugen von Zufallszahlen, wobei das System eine optische Komponente, die zum Erzeugen zweier optischer Signale eingerichtet ist, sowie zwei Photodetektoren (131, 132) umfasst, die mit der optischen Komponente verbunden sind, wobei der erste Photodetektor zum Empfangen des ersten optischen Signals sowie zum Erzeugen eines ersten elektrischen Signals auf Basis des ersten optischen Signals eingerichtet ist und der zweite Photodetektor zum Empfangen des zweiten optischen Signals sowie zum Erzeugen eines zweiten elektrischen Signals (172) auf Basis des zweiten optischen Signals eingerichtet ist, die optische Komponente zum Erzeugen eines ersten und eines zweiten optischen Signals eingerichtet ist, die zufällig ein erstes und ein zweites elektrisches Signal ergeben, wobei das erste und das zweite elektrische Signal entweder gleich sind oder eines größer ist als das andere, und das System **dadurch gekennzeichnet ist, dass** die Photodetektoren (131, 132) zum Übertragen des ersten und des zweiten elektrischen Signals (171, 172) zu einem Komparator (140) eingerichtet sind, wobei der Komparator zum Bereitstellen eines Ausgangs auf Basis eines Vergleichs des ersten und des zweiten elektrischen Signals eingerichtet ist, und damit die Zufallszahl bereitgestellt wird, wobei die einzigen Komponenten, die zum Umwandeln des optischen Interferenzsignals in die Zufallszahlen verwendet werden, die Photodetektoren und der Komparator sind, so dass die Notwendigkeit von Subtraktoren wegfällt.

2. System nach Anspruch 1, wobei die optische Komponente des Systems zwei Laser-Quellen (111, 112) sowie ein Interferometer (120) umfasst, das in Bezug auf die Laser-Quellen so angeordnet und eingerichtet ist, dass Interferenz zwischen von der ersten Laser-Quelle und der zweiten Laser-Quelle emittiertem Laserlicht (151, 152) erreicht wird, wobei die relative Phase des von der ersten Laser-Quelle emittierten Laserlichts (151) und des von der zweiten Laser-Quelle (112) emittierten Laserlichts zufällig ist, das Interferometer (120) zum Erzeugen zweier Interferenzstrahlen (161, 162) eingerichtet ist, das interferometer so eingerichtet ist, dass es den ersten Interferenzstrahl zum Erzeugen des ersten elektrischen Signals zu dem ersten Photodetektor und den zweiten Interferenzstrahl zum Erzeugen des zweiten elektrischen Signals zu dem zweiten Photodetektor leitet.

3. System (100) nach Anspruch 2, wobei das Interferometer (120) ein Michelson-Morley-Interferometer oder ein Mach-Zehnder-Interferometer oder ein Multimode-Interferometer mit zwei optischen Austrittsöffnungen ist, und die erste optische Austrittsöffnung mit dem ersten Photodetektor (131) verbunden ist und die zweite optische Austrittsöffnung mit dem zweiten Photodetektor (132) verbunden ist.

4. System (100) nach Anspruch 2 oder 3, wobei die erste Laser-Quelle (111) und die zweite Laser-Quelle Laserdioden sind.

5. System (100) nach einem der Ansprüche 2 bis 4, wobei die erste Laser-Quelle (111) so eingerichtet ist, dass sie im Konstant-Modus (constant wave mode) betrieben wird, und die zweite Laser-Quelle (112) so eingerichtet ist, dass sie im Puls-Modus betrieben wird; oder die erste Laser-Quelle und die zweite Laser-Quelle so eingerichtet sind, dass sie im Puls-Modus betrieben werden; oder die erste Laser-Quelle und die zweite Laser-Quelle im Konstant-Modus betrieben werden; oder die erste Laser-Quelle im Konstant-Modus betrieben wird und die zweite Laser-Quelle ausgeschaltet oder nicht vorhanden ist.

6. System (100) nach Anspruch 5, wobei die zweite Laser-Quelle (112) so eingerichtet ist, dass sie in einem Leistungsbereich betrieben wird, der von einem Wert unterhalb der Laserschwelle bis zu einem Wert oberhalb der Laserschwelle reicht.

7. System (100) nach Anspruch 5 oder 6, wobei eine Pulsfrequenz, mit der die zweite Laser-Quelle (112) einen Wert oberhalb der Laserschwelle erreicht, höher als 100MHz, oder höher als 500MHz oder höher als 1GHz ist.

8. System (100) nach einem der Ansprüche 2 bis 7, wobei die Laser-Quellen über separate Wellenleiter mit dem interferometer (120) verbunden sind und/oder wobei das Interferometer über einen separaten Wellenleiter mit jedem der Photodetektoren (131, 132) verbunden ist.

9. System (100) nach einem der Ansprüche 2 bis 8, das des Weiteren ein Temperierungs-System (380) zum Temperieren der Laser-Quellen umfasst, wobei das Temperierungs-System so eingerichtet ist, dass es die Temperatur der ersten und der zweiten Laser-Quelle unabhängig regelt.

10. Verfahren zum Erzeugen von Zufallszahlen unter Verwendung eines Systems, das eine optische Komponente, zwei Photodetektoren (131, 132), die mit der optischen Komponente verbunden sind, sowie einen Komparator umfasst, der mit dem Photodetektor verbunden ist, wobei das Verfahren umfasst, dass durch die optische Komponente zwei optische Signale erzeugt werden und das erste optische Signal zu dem ersten Photodetektor (131) und das zweite optische Signal zu dem zweiten Photodetektor (132) übertragen werden, durch den ersten Photodetektor ein erstes elektrisches Signal (101) auf Basis des ersten optischen Signals erzeugt wird und durch den zweiten Photodetektor ein zweites elektrisches Signal (172) auf Basis des zweiten optischen Signals erzeugt wird , wobei das erste und das zweite optische Signal zufällig ein erstes und ein zweites elektrisches Signal ergeben und das erste und das zweite elektrische Signal entweder gleich sind oder eines größer ist als das andere, wobei das Verfahren **dadurch gekennzeichnet ist, dass** das erste elektrische Signal und das zweite elektrische Signal zu dem Komparator (140) übertragen werden und durch den Komparator das erste und das zweite elektrische Signal verglichen werden und durch den Komparator ein Ausgang auf Basis des Vergleichs des ersten und des zweiten elektrischen Signals bereitgestellt wird und damit die Zufallszahl bereitgestellt wird, wobei die einzigen Komponenten, die zum Umwandeln des optischen Interferenzsignals in die Zufallszahlen verwendet werden, die Photodetektoren und der Komparator sind, so dass die Notwendigkeit von Subtraktoren wegfällt.

11. Verfahren nach Anspruch 10, wobei die optische Komponente zwei Laser-Quellen (111, 112) sowie ein Interferometer (120) umfasst, und Erzeugen des ersten und des zweiten optischen Signals umfasst, dass von jeder der Laser-Quellen Laser-Licht in das interferometer hinein emittiert wird, wobei die relative Phase des von der ersten Laser-Quelle (111) emittierten Laserlichts und des von der zweiten Laser-Quelle (112) emittierten Laserlichts zufällig ist und mittels des Interferometers (120) zwei Interferenzstrahlen (161, 162) erzeugt werden, wobei das Interferometer den ersten Interferenzstrahl (151) zum Erzeugen des ersten elektrischen Signals zu dem ersten Photodetektor und den zweiten Interferenzstrahl (152) zum Erzeugen des zweiten elektrischen Signals zu dem zweiten Photodetektor leitet.

12. Verfahren nach Anspruch 10 oder 11, wobei der Ausgang des Komparators (140) 1 ist, wenn das erste elektrische Signal größer als das zweite elektrische Signal ist, und in jedem anderen Fall 0 ist.

13. Verfahren nach Anspruch 11 oder 12, wobei die erste Laser-Quelle (111) im Konstant-Modus (constant wave mode) betrieben wird und die zweite Laser-Quelle (112) im Puls-Modus betrieben wird; oder wobei die erste Laser-Quelle und die zweite Laser-Quelle im Puls-Modus betrieben werden.

14. Verfahren nach Anspruch 13, wobei die zweite Laser-Quelle (112) periodisch in einem Leistungsbereich betrieben wird, der von einem Wert unterhalb der Laserschwelle bis zu einem Wert oberhalb der Laserschwelle reicht, wobei die zweite Laser-Quelle periodisch die Laserschwelle erreicht.

15. Verfahren nach Anspruch 14, wobei eine Pulsfrequenz, mit der die zweite Laser-Quelle (112) einen Wert oberhalb der Laserschwelle erreicht, höher als 100MHz oder höher als 500MHz oder höher als 1GHz ist.

16. Verfahren nach einem der Ansprüche 11 bis 15, wobei ein Temperierungs-System (380) die Temperatur der ersten und der zweiten Laser-Quelle (111, 112) unabhängig regelt.

17. Verfahren nach Anspruch 16, wobei das Temperierungs-System (380) die Temperatur so regelt, dass eine Differenz zwischen der Temperatur der ersten Laser-Quelle (111) und der Temperatur der zweiten Laser-Quelle (112) kleiner ist als 0,1 K.

## Revendications

1. Système (100) pour générer des nombres aléatoires, le système comprenant un composant optique qui est adapté pour générer deux signaux optiques, et deux photodétecteurs (131, 132) connectés au composant optique, dans lequel le premier photodétecteur est adapté pour recevoir le premier signal optique et pour générer un premier signal électrique selon le premier signal optique et le deuxième photodétecteur est adapté pour recevoir le deuxième signal optique et pour générer un deuxième signal électrique (172) selon le deuxième signal optique, dans lequel le composant optique est adapté pour générer des premier et deuxième signaux optiques qui ont pour résultat aléatoire des premier et deuxième signaux électriques où les premier et deuxième signaux électriques sont soit égaux, soit l'un est plus grand que l'autre, le système **caractérisé en ce que** les photodétecteurs (131, 132) sont adaptés pour transmettre les premier et deuxième signaux électriques (171, 172) à un comparateur (140), dans lequel le comparateur est adapté pour fournir une sortie selon une comparaison des premier et deuxième signaux électriques, fournissant ainsi le nombre aléatoire, dans lequel les seuls composants utilisés pour transformer le signal d'interférence optique en les nombres aléatoires sont les photodétecteurs et le comparateur, éliminant ainsi le recours à des soustracteurs.

2. Le système selon la revendication 1, dans lequel le composant optique du système comprend deux sources laser (111, 112), un interféromètre (120) disposé et adapté par rapport aux sources laser pour obtenir une interférence entre une lumière laser (151, 152) émise depuis la première source laser et la deuxième source laser, dans lequel la phase relative de la lumière laser (151) émise depuis la première source laser et la lumière laser émise depuis la deuxième source laser (112) est aléatoire, dans lequel l'interféromètre (120) est adapté pour générer deux faisceaux d'interférence (161, 162), dans lequel l'interféromètre est adapté pour transmettre le premier faisceau d'interférence au premier photodétecteur pour générer le premier signal électrique et le deuxième faisceau d'interférence au deuxième photodétecteur pour générer le deuxième signal électrique.

3. Le système (100) selon la revendication 2, dans lequel l'interféromètre (120) est un interféromètre de Michelson et Morley ou un interféromètre de Mach-Zehnder ou un interféromètre multimode avec deux ports de sortie optiques, dans lequel le premier port de sortie optique est connecté au premier photodétecteur (131) et le deuxième port de sortie optique est connecté au deuxième photodétecteur (132).

4. Le système (100) selon la revendication 2 ou 3, dans lequel la première source laser (111) et la deuxième source laser sont des diodes laser.

5. Le système (100) selon l'une quelconque des revendications 2 à 4, dans lequel la première source laser (111) est adaptée pour être pilotée en mode d'onde constante et la deuxième source de laser (112) est adaptée pour être pilotée en mode d'impulsion ; ou dans lequel la première source laser et la deuxième source laser sont pilotées en mode d'impulsion ; ou dans lequel la première source laser et la deuxième source laser sont pilotées en mode d'onde constante ; ou dans lequel la première source laser est pilotée en mode d'onde constante t la deuxième source laser est hors tension ou inexistante.

6. Le système (100) selon la revendication 5, dans lequel la deuxième source laser (112) est adaptée pour être pilotée dans une plage de puissance allant d'une valeur au-dessous du seuil d'émission laser à une valeur au-dessus du seuil d'émission laser.

7. Le système (100) selon la revendication 5 o 6, dans lequel une fréquence de répétition d'impulsions à laquelle la deuxième source laser (112) atteint une valeur au-dessus du seuil d'émission laser est supérieure à 100 MHz, ou supérieure à 500 MHz, ou supérieure à 1 GHz.

8. Le système (100) selon l'une quelconque des revendications 2 à 7, dans lequel les sources laser sont connectées à l'interféromètre (120) par des guides d'onde séparés et/ou dans lequel l'interféromètre est connecté à chacun des photodétecteurs (131, 132) par un guide d'onde séparé.

9. Le système (100) selon l'une quelconque des revendications 2 à 8, comprenant en outre un système de tempérage (380) pour tempérer les sources laser, le système de tempérage adapté pour réguler indépendamment la température des première et deuxième sources laser.

10. Procédé pour générer des nombres aléatoires en utilisant un système comprenant un composant optique, deux photodétecteurs (131, 132) connectés au composant optique, et un comparateur connecté aux photodétecteurs, le procédé comprenant une génération, par le composant optique, de deux signaux optiques et une transmission du premier signal optique au premier photodétecteur (131) et du deuxième signal optique au deuxième photodétecteur (132), génération, par le premier photodétecteur, d'un premier signal électrique (171) selon le premier signal optique et génération, par le deuxième photodétecteur, d'un deuxième signal électrique (172) selon le deuxième signal optique, dans lequel les premier et deuxième signaux optiques ont pour résultat aléatoire des premier et deuxième signaux électriques où les premier et deuxième signaux électriques sont soit égaux, soit l'un est plus grand que l'autre, le procédé **caractérisé par** une transmission du premier signal électrique et du deuxième signal électrique au comparateur (140) et une comparaison, par le comparateur, des premier et deuxième signaux électriques et une fourniture, par le comparateur, d'une sortie selon la comparaison des premier et deuxième signaux électriques, fournissant ainsi le nombre aléatoire, dans lequel les seuls composants utilisés pour transformer le signal d'interférence optique en les nombres aléatoires sont les photodétecteurs et le comparateur, éliminant ainsi le recours à des soustracteurs.

11. Le procédé selon la revendication 10, dans lequel le composant optique comprend deux sources laser (111, 112) et un interféromètre (120) et dans lequel une génération des premier et deuxième signaux optiques comprend une émission, par chacune des sources laser, d'une lumière laser vers l'interféromètre, dans lequel la phase relative de la lumière laser émise par la première source laser (111) et la lumière laser émise par la deuxième source laser (112) est aléatoire, une génération, par l'interféromètre, de deux faisceaux, l'interféromètre transmettant le premier faisceau d'interférence (151) au premier photodétecteur pour générer le premier signal électrique et le deuxième faisceau d'interférence (152) au deuxième photodétecteur pour générer le deuxième signal électrique.

12. Le procédé selon la revendication 10 ou 11, dans lequel la sortie du comparateur (140) est 1 au cas où le premier signal électrique est supérieur au deuxième signal électrique et 0 dans tout autre cas.

13. Le procédé selon la revendication 11 ou 12, dans lequel la première source laser (111) est pilotée en mode d'onde constante et la deuxième source de laser (112) est pilotée en mode d'impulsion ; ou dans lequel la première source laser et la deuxième source laser sont pilotées en mode d'impulsion.

14. Le procédé selon la revendication 13, dans lequel la deuxième source laser (112) est périodiquement pilotée dans une plage de puissance allant d'une valeur au-dessous du seuil d'émission laser à une valeur au-dessus du seuil d'émission laser, dans lequel la deuxième source laser atteint périodiquement le seul d'émission laser.

15. Le procédé selon la revendication 14, dans lequel une fréquence de répétition d'impulsions à laquelle la deuxième source laser (112) atteint une valeur au-dessus du seuil d'émission laser est supérieure à 100 MHz, ou supérieure à 500 MHz, ou supérieure à 1 GHz.

16. Le procédé selon l'une quelconque des revendications 11 à 15, dans lequel un système de tempérage (380) régule indépendamment la température des première et deuxième sources laser (111, 112).

17. Le procédé selon la revendication 16, dans lequel le système de tempérage (380) régule la température de sorte qu'une différence dans la température de la première source laser (111) et la température de la deuxième source laser (112) est inférieure à 0,1 K.
